# EUROPÄISCHE PATENTANMELDUNG

(11) **EP 0 829 937 A2**
(43) Veröffentlichungstag der Anmeldung: **18.03.1998**
(21) Anmeldenummer: 97115488.5
(22) Anmeldetag: 08.09.1997
(51) Int. Cl.: H02B 5/00

(54) **Freiluftdurchführungen für einen Schaltfeldcontainer**

(30) Priorität: 12.09.1996 DE 19637049
(71) Anmelder: ABB PATENT GmbH, 68309 Mannheim (DE)
(72) Erfinder: Körber, Franz-Josef, 63674 Altenstadt (DE); Paulsson, Anders, 63755 Alzenau (DE)
(74) Vertreter: Rupprecht, Klaus, Dipl.-Ing.

(57) **Zusammenfassung**

Die Erfindung betrifft einen Schaltfeldcontainer (10), an dessen Dach Freiluftdurchführungen für den Eingang und den Ausgang einer innerhalb des Containers angeordneten Schaltanlage, an deren freien Enden Anschlüsse für Freileitungen angebracht sind, angeordnet sind. Die Freiluftdurchführungen umfassen für den Eingang und den Ausgang je eine am Dach des Containers befestigte Gehäusehaube (15, 16), an denen die Isolatoren (31, 32, 33) befestigt sind, wobei die Durchführungen bzw. die Isolatoren des Eingangs ebenso wie des Ausgangs in je einer Ebene angeordnet sind. Je ein Isolator (32) steht senkrecht zum Dach und die anderen (31, 33) stehen gegenüber der Vertikalen schräg, wobei der Winkel zwischen den schräg stehenden Isolatoren (31, 33) und dem vertikal stehenden durch den Mindestabstand der Freileitungsanschlüsse (31, 32, 33) an den Isolatoren (31, 32, 33) und die Länge der Isolatoren definiert ist.

## Beschreibung

Die Erfindung betrifft einen Schaltfeldcontainer, an dessen Dach Freiluftdurchführungen für den Ein- und Ausgang der innerhalb des Containers befindlichen Schaltanlage angeordnet sind, an deren freien Enden Anschlüsse für Freileitungen angebracht sind.

Ein derartiger Schaltfeldcontainer ist aus der DE 39 15 699 C3 bekannt geworden. Bei diesem Schaltfeldcontainer sind am Dach jeweils drei in einer Linie angeordnete Freiluftdurchführungen für den Eingang und drei in einer Linie angeordnete Freiluftdurchführungen für den Ausgang befestigt; die einzelnen Freiluftdurchführungen verlaufen in einer Linie parallel zur Längserstreckung des Schaltfeldcontainers, wobei je nach Bedarf die Durchführungen der einzelnen Phasen in unterschiedliche Stellungen bezogen auf die Durchführung der mittleren Phase einstellbar sind.

Aufgabe der Erfindung ist es, einen Schaltfeldcontainer der eingangs genannten Art zu vereinfachen.

Diese Aufgabe wird erfindungsgemäß dadurch gelöst, daß die Freiluftdurchführungen mit den Isolatoren für den Eingang und den Ausgang an je einer am Dach des Containers befestigten Gehäusehaube befestigt sind, wobei die Durchführungen des Eingangs ebenso wie die des Ausgangs in je einer Ebene angeordnet sind, und daß je eine Durchführung senkrecht zum Dach und die anderen gegenüber der Vertikalen schräg stehen.

An der Gehäusehaube befindet sich demgemäß ein Flansch, mit dem die Gehäusehaube am Containerdach befestigt werden kann; an der Gehäusehaube befinden sich weiterhin drei Stutzen, an denen die Isolatoren der Freiluftdurchführungen festgeschraubt werden können.

Dabei bestehen mehrere Anordnungsmöglichkeiten: entweder liegen alle Isolatoren in einer Ebene, die mittig und in Längsrichtung des Containers verläuft, oder die Isolatoren jeder Freiluftdurchführung liegen in je einer Ebene, die senkrecht zur Längsrichtung verläuft. Es besteht auch die Möglichkeit die Isolatoren so anzuordnen, daß die Ebene der Isolatoren der einen Freiluftdurchführung in Längsrichtung und die Ebene der Isolatoren der anderen Freileitung quer dazu verlaufen.

Die unterschiedliche Ausrichtung erfolgt einfach durch Drehen der Gehäusehaube. Ggf. kann jede Ebene auch schräg zur Längsrichtung des Schaltfeldcontainers verlaufen.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigen:
- Fig. 1: eine Seitenansicht eines Containers,
- Fig. 2: eine Frontansicht des Containers gemäß Fig. 1, und
- Fig. 3: eine Aufsicht auf einen Container mit Freiluftdurchführungen in unterschiedlicher Ausrichtung.

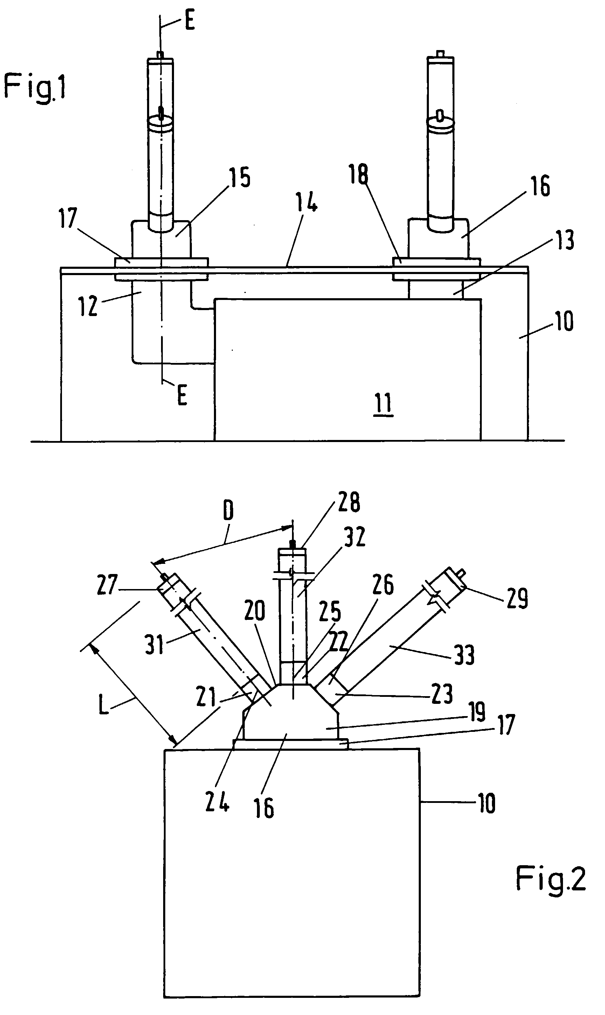

Innerhalb eines handelsüblichen Containers 10 befindet sich eine Schaltanlage 11, deren Konstruktion und äußere Ausgestaltung für die Erfindung nicht weiter von Interesse sind. Der Eingang der Schaltanlage 11 ist mit 12 und der Ausgang mit 13 bezeichnet. Auf der Oberseite des Daches 14 des Containers 10 sind zwei Gehäusehauben 15 und 16 mittels einer Flanschverbindung 17, 18 befestigt. Die Gehäusehaube 15 bzw. 16, Fig. 2, von denen die Gehäusehaube 15 näher beschrieben wird, besitzt einen etwa oval ausgeführten Gehäuseabschnitt 19, an dessem freien Ende der kreisförmige Flansch 17 angebracht ist. Aus der Gehäusehaube 15 sind drei Stutzen 21, 22 und 23 herausgeführt, deren Mittelachsen 24, 25 und 26 in einer Ebene E-E liegen. Bei der Anordnung gemäß den Fig. 1 und 2 verläuft die Ebene der Freiluftdurchführung mit der Gehäusehaube 15 senkrecht zu der Längserstreckung des Containers 10. An die Stutzen 21, 22, 23 sind in an sich bekannter Weise Isolierkörper oder Isolatoren 31, 32 und 33, die als handelsübliche Freiluftisolatordurchführungen ausgebildet sind, befestigt, deren freie Enden die Anschlüsse 27, 28, 29 für anschließende Freiluftleitungen tragen. Der Winkel zwischen den Achsen 24, 25 und 26 hängt ab von der Länge L der Isolatordurchführungen 31, 32, 33 und der Forderung nach Einhaltung einer Mindestdurchschlagsfestigkeit zwischen den Anschlüssen 27, 28 und 29; der Abstand D der Anschlüsse 27 bis 29 ist der zulässige Mindestabstand.

Gegenüber der Anordnung nach der DE 39 15 699 C3 ist nur jeweils eine Durchführung durch das Dach des Containers für den Ein- bzw. Ausgang erforderlich; die Anschlüsse der Isolatoren bzw. Befestigungspunkte befinden sich an den Stutzen 21 bis 23 der Gehäusehaube 15.

Die Gehäusehaube 16 mit den dazugehörigen Freiluftdurchführungen und Isolatoren ist in gleicher Weise ausgebildet wie die Anordnung mit der Gehäusehaube 15, so daß sie hier nicht weiter beschrieben wird.

Bei der Anordnung nach den Fig. 1 und 2 liegen die Isolatoren an der Gehäusehaube 16 ebenfalls in einer Ebene, die parallel zur Ebene E-E bzw. senkrecht zur Längserstreckung des Schaltfeldcontainers 10.

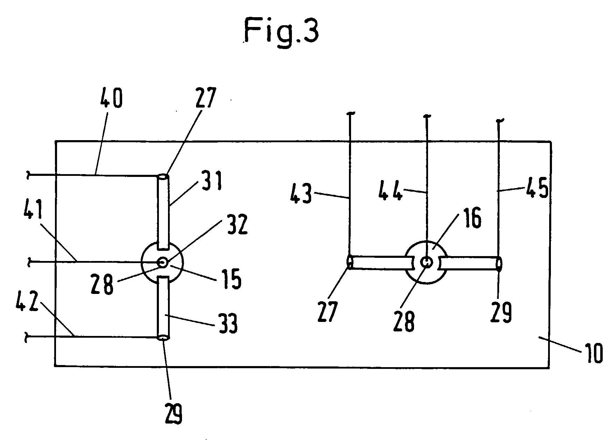

Bei der Anordnung nach Fig. 3 verläuft die Ebene der Isolatoren an der Gehäusehaube 15 senkrecht zu und die der Isolatoren an der Gehäusehaube 16 in Richtung der Längserstreckung des Schaltfeldcontainers 10. Dies wird einfach dadurch erreicht, daß die Gehäusehaube 16 um 90° gegenüber der Anordnung nach Fig. 1 gedreht wird. Damit können die Anschlußleitungen 40, 41, 41 zu Freileitungen (nicht gezeigt) in Richtung der Längserstreckung des Schaltfeldcontainers 10 und die Anschlußleitungen 43, 44, 45 senkrecht dazu vom Container abgeführt werden.

Die Gehäusehaube kann auch einen kreisförmigen Abschnitt 19 aufweisen.

## Patentansprüche

1. Schaltfeldcontainer, an dessen Dach Freiluftdurchführungen für den Eingang und den Ausgang einer innerhalb des Containers angeordneten Schaltanlage, an deren freien Enden Anschlüsse für Freileitungen angebracht sind, vorgesehen sind dadurch gekennzeichnet, daß die Freiluftdurchführungen für den Eingang und den Ausgang je eine am Dach des Containers befestigte Gehäusehaube (15, 16) umfassen, an denen die Isolatoren (31, 32, 33) befestigt sind, wobei die Isolatoren (31, 32, 33) des Eingangs ebenso wie des Ausgangs in je einer Ebene angeordnet sind, und daß je ein Isolator (32) jeder Freiluftdurchführung senkrecht zum Dach und die anderen (31, 33) gegenüber der Vertikalen schräg stehen, wobei der Winkel zwischen den schräg stehenden Isolatoren (31, 33) und dem vertikal stehenden (32) durch den Mindestabstand der Freileitungsanschlüsse (27, 28, 29) an den Isolatoren (31, 32, 33) und die Länge der Isolatoren (31, 32, 33) definiert ist.

2. Schaltfeldcontainer nach Anspruch 1, dadurch gekennzeichnet, daß die Gehäusehaube (15, 16) drei Stutzen (21, 22, 23) aufweist, an denen die Isolatoren (31, 32, 33) der Freiluftdurchführungen befestigt sind.

3. Schaltfeldcontainer nach einem der vorherigen Ansprüche, dadurch gekennzeichnet, daß die Ebene der Isolatoren (31, 32, 33) wenigstens einer Freiluftdurchführung senkrecht zur Längserstreckung des Schaltfeldcontainers (10) verläuft.

4. Schaltfeldcontainer nach einem der Ansprüche 1 und 2, dadurch gekennzeichnet, daß die Ebene der Isolatoren (31, 32, 33) wenigstens einer Freiluftdurchführung in Richtung der Längserstreckung des Schaltfeldcontainers (10) verläuft.
